# EUROPEAN PATENT SPECIFICATION

(11) **EP 4 594 615 B1**
(45) Date of publication and mention of the grant of the patent: **27.05.2026**
(21) Application number: 23801003.7
(22) Date of filing: 30.10.2023
(51) Int. Cl.: F03D 1/00

(54) **SYSTEM AND METHOD FOR OPENING A NACELLE ROOF PANEL**
SYSTEM UND VERFAHREN ZUM ÖFFNEN EINER GONDELDACHPLATTE
SYSTÈME ET PROCÉDÉ D'OUVERTURE D'UN PANNEAU DE TOIT DE NACELLE

(30) Priority: 01.11.2022 US 202263421387 P; 03.08.2023 US 202363530600 P
(43) Date of publication of application: 06.08.2025
(73) Proprietor: Liftoff Holding B.V., 2288 JA Rijswijk (NL)
(72) Inventor: MAIJ, Eelko, 2291 TN Wateringen (NL); FICKER, Gerardus Bernardus Franciscus Heleen, 3607 PP Maarssen (NL)
(74) Representative: Glück Kritzenberger Patentanwälte PartGmbB
(86) International application number: PCT/IB2023/060931
(87) International publication number: WO 2024/095135

(56) References cited:
- EP-A1- 4 047 205
- WO-A1-2012/105971
- WO-A1-2021/013314
- US-A1- 2021 355 920

## Description

### Cross-reference to Related Applications

This application claims the benefit of United States patent application USSN 63/421,387 filed November 1, 2022 and United States patent application USSN 63/530,600 filed August 3, 2023.

### Field

This application relates to wind turbines, more particularly to a system and method for opening a roof panel of a nacelle of a wind turbine.

### Background

A nacelle of a wind turbine typically comprises one or more roof panels that require opening in order to access the inside of the nacelle to replace major components of the wind turbine (e.g., main shaft, gearbox, generator, rotor and the like) and/or to install one or more robust lift systems in the nacelle. Heretofore, it has been necessary to lower roof panels to the ground in order to provide enough space to enable major components and more robust lift systems to be removed and installed. However, for an offshore wind turbine or other wind turbines erected in areas where the ground is unavailable to receive the roof panels, there is a need for being able to completely open and remove at least one of the roof panels from the nacelle without needing to lower a roof panel to the ground.

Documents considered during the patent prosecution are i.a.: US 2021/355920 A1, WO 2021/013314 A1, EP 4 047 205 A1 and WO 2012/105971 A1.

### Summary

A system for opening a roof panel of a nacelle of a wind turbine, the system comprising: a bracket arm mountable in the nacelle beneath the roof panel, the bracket arm pivotally connectable to a sidewall of the nacelle inside the nacelle, the bracket arm mountable underneath the roof panel to a portion of the roof panel; and, a lifting device mountable in the nacelle, the lifting device operable when connected to the roof panel to move the roof panel vertically and horizontally to move the roof panel into a vertical orientation by the sidewall of the nacelle outside the nacelle.

A method for opening a roof panel of a nacelle of a wind turbine comprises utilizing the system described above.

In one embodiment, the method of opening a roof panel of a nacelle of a wind turbine comprises: connecting a lifting device to the roof panel proximate an inner edge of the roof panel; disconnecting the roof panel from roof panel connections that connect the roof panel to a sidewall of the nacelle; pivotally mounting a bracket arm to the sidewall of the nacelle and pivotally mounting the bracket arm to a portion of the roof panel on an underside of the roof panel farther from the inner edge of the roof panel than where the lifting device is connected to the roof panel; and, operating the lifting device to move the roof panel vertically and horizontally to move the roof panel into a vertical orientation by the sidewall of the nacelle outside the nacelle.

In another embodiment, the method of opening a roof panel of a nacelle of a wind turbine comprises: rigidly connecting a bracket arm to the roof panel; pivotally connecting the bracket arm to sidewall of the nacelle inside the nacelle; pivotally connecting a lifting device in the nacelle to the nacelle and the bracket arm; and, operating the lifting device to move the roof panel vertically and horizontally to move the roof panel into a vertical orientation by the sidewall of the nacelle outside the nacelle.

The system and method permit opening a roof panel of a nacelle of a wind turbine and situating the opened roof panel in a location that is mostly below an upper edge of the sidewall of the nacelle and out of the way of any lift systems and wind turbine components during a maintenance operation, while not needing to lower the roof panel to the ground.

Further features will be described or will become apparent in the course of the following detailed description. It should be understood that each feature described herein may be utilized in any combination with any one or more of the other described features, and that each feature does not necessarily rely on the presence of another feature except where evident to one of skill in the art. The scope of protection being defined by the appended claims.

### Brief Description of the Drawings

For clearer understanding, preferred embodiments will now be described in detail by way of example, with reference to the accompanying drawings, in which:
Fig. 1 depicts a schematic front cross-section of a nacelle of a wind turbine showing a first variation of a roof panel opening system, the roof panel opening system mounted in the nacelle holding a nacelle roof panel when the nacelle roof panel has been disconnected from the nacelle but is still in a horizontal orientation in the nacelle.
Fig. 2 depicts the nacelle after Fig. 1 when the roof panel opening system has lifted the nacelle roof panel to a position higher than a side of the nacelle.
Fig. 3 depicts the nacelle after Fig. 2 when the roof panel opening system has begun to tilt the nacelle roof panel and to move the nacelle roof panel over the side of the nacelle.
Fig. 4 depicts the nacelle after Fig. 3 when the roof panel opening system has moved the nacelle roof panel substantially completely over the side of the nacelle.
Fig. 5 depicts the nacelle after Fig. 4 when the nacelle roof panel is opened and the roof panel opening system has tilted the nacelle roof panel into a vertical orientation and lowered the nacelle roof panel to a temporary storage position outside and beside the nacelle.
Fig. 6 depicts an overview of a method of opening a nacelle roof panel in which Fig. 1 to Fig. 5 are depicted sequentially side-by-side.
Fig. 7 depicts a schematic front cross-section of a nacelle of a wind turbine showing a second variation of a roof panel opening system, the roof panel opening system installed in the nacelle below the roof panel.
Fig. 8 depicts the nacelle after Fig. 7 when the roof panel opening system has lifted the nacelle roof panel to a position higher than a side of the nacelle.
Fig. 9 depicts the nacelle after Fig. 8 when the roof panel opening system has begun to move the nacelle roof panel over the side of the nacelle.
Fig. 10 depicts the nacelle after Fig. 9 when the roof panel opening system has moved the nacelle roof panel higher and further over the side of the nacelle.
Fig. 11 depicts the nacelle after Fig. 10 when the roof panel opening system has begun to tilt the nacelle roof panel downward and has moved the nacelle roof panel even further over the side of the nacelle
Fig. 12 depicts the nacelle after Fig. 11 when the roof panel opening system has almost completely moved the nacelle roof panel over the side of the nacelle.
Fig. 13 depicts the nacelle after Fig. 12 when the nacelle roof panel is opened and the roof panel opening system has tilted the nacelle roof panel into a vertical orientation and lowered the nacelle roof panel to a temporary storage position outside and beside the nacelle.
Fig. 14 depicts the nacelle after Fig. 13 with the roof panel opening system uninstalled and with the nacelle roof panel secured in the temporary storage position.
Fig. 15 depicts an overview of a method of opening a nacelle roof panel in which Fig. 7 to Fig. 14 are depicted sequentially from top left to bottom right.

### Detailed Description

The system for opening a roof panel of a nacelle of a wind turbine comprises a lifting device and a bracket arm, and optionally one or more stabilizing devices.

The lifting device may be powered manually, hydraulically, pneumatically or electrically. Some examples of lifting devices include cranes, winches, turnbuckles, ratcheted lines or straps, telescoping actuators (e.g., hydraulic cylinders, pneumatic cylinders or electric linear actuators) and the like. One or more than one lifting device may be utilized. In some embodiments, the lifting device may be an existing service crane found in the nacelle of many models of wind turbines or some other lift system installed in the nacelle. In some embodiments, the lifting device comprises a boom crane comprising a boom, a hydraulic cylinder to raise and lower the boom and a winch connected to a lift line to raise and lower the lift line. In some embodiments, the lifting device comprises a first telescoping actuator pivotally connectable to the nacelle and pivotally connected to the arm bracket. In some embodiments, the lifting device comprises a second telescoping actuator connected to the arm bracket and pivotally connected to the second telescoping actuator. However, any lifting device that is mountable in the nacelle of the wind turbine and that can lift, hold and move vertically and horizontally a roof panel of the nacelle is suitable.

When installed inside the nacelle, the bracket arm is connected to the roof panel. The bracket arm may be connected rigidly (i.e., immovably) or pivotally to the roof panel. The bracket arm may be connected to an underside of the roof panel, or to any other accessible portion of the roof panel, for example a front or rear edge of the roof panel. The bracket arm preferably has a U-shaped portion that hooks over the sidewall of the nacelle to support the opened door on a top edge of the sidewall of the nacelle outside and beside the sidewall nacelle with arms of the U-shaped portion bracketing the sidewall therebetween.

In some embodiments, the bracket arm comprises a first link rigidly mountable to the sidewall inside the nacelle. In some embodiments, the bracket arm comprises a second link pivotally mounted to the first link and pivotally mountable to the roof panel. The second link is sized shaped to hook over an upper edge of the sidewall when the roof panel is moved vertically and horizontally by the lifting device. In some embodiments, the bracket arm comprises more than two independent links in which some of the independent links are rigidly connected to another of the independent links. In some embodiments, the bracket arm comprises a single monolithic link pivotally connected to the roof panel and the sidewall of the nacelle.

In some embodiments, the bracket arm has a U-shaped portion configured to straddle an upper edge of the sidewall of the nacelle. In some embodiments, a portion of the bracket arm on one side of the U-shaped portion is pivotally connected to the roof panel. The bracket may comprise linear sections, arcuate sections or sections that have both linear and arcuate portions. However independent sections are shaped, the bracket arm has dimensions and an overall shape designed to be able to rotate about a pivot point to carry and re-orient the roof panel so that the roof panel can be moved by the lifting device from a horizontal orientation over the nacelle to a vertical orientation by the sidewall of the nacelle outside the nacelle.

In some embodiments, the bracket arm comprises a first link rigidly mountable to the sidewall inside the nacelle. In some embodiments, the bracket arm comprises a second link pivotally mounted at a first pivot point to the first link and pivotally mountable at a second pivot point to the roof panel. In some embodiments, the second link comprises a proximal section pivotally mounted to the first link at the first pivot point. In some embodiments, the second link comprises a distal section pivotally mountable to the roof panel at the second pivot point. In some embodiments, the second link comprises a middle section between the proximal and distal sections defining a U-shaped portion between the first and second pivot points. In some embodiments, the proximal section has a length longer than a first distance between the first link and an upper edge of the sidewall. In some embodiments, the middle section has a length longer than a second distance between the first pivot point and sidewall. In some embodiments, the distal section has a length longer than a third distance between the second pivot point and a meeting point where the middle section meets the distal section. In some embodiments, the second link folds over the upper edge of the sidewall to situate the roof panel in the vertical orientation by the sidewall outside the nacelle when the roof panel is moved vertically and horizontally by the lifting device.

In some embodiments, the bracket arm is pivotally mountable to a central portion of the roof panel on the underside of the roof panel. In some embodiments, the bracket arm is pivotally mountable to a side portion of the roof panel on the underside of the roof panel. In some embodiments, the bracket arm is pivotally mountable to a center of the central portion of the roof panel. In some embodiments, the bracket arm is pivotally mountable to the central portion but off-center from the center of the central portion. In some embodiments, the nacelle comprises a roof panel connection to which the roof panel was connected, wherein the first link is mountable to the roof panel connections.

In some embodiments, the bracket arm comprises a series of arm segments sized and shaped to permit the bracket arm to hook over an upper edge of the sidewall when the roof panel is moved vertically and horizontally by the lifting device. In some embodiments, the series of arm segments comprises a proximal segment pivotally mountable at a proximal end thereof to the sidewall inside the nacelle. In some embodiments, the series of arm segments comprises a distal segment rigidly mountable to the roof panel. In some embodiments, the series of arm segments comprises a middle segment between the proximal and distal segments defining a U-shaped portion between the proximal end of the proximal segment and a distal end of the distal segment. In some embodiment, the middle segment comprises a tail portion extending beyond a meeting point between the proximal segment and the middle segment.

The one or more stabilizing devices stabilize and/or regulate speed of movement of the roof panel while the roof panel is being moved by the lifting device. In some embodiments, the one or more stabilizing devices are connectable to the nacelle and to the roof panel to stabilize and/or regulate speed of movement of the roof panel while the roof panel is being moved by the lifting device. In some embodiments, the one or more stabilizing devices is connectable to the nacelle and to the bracket arm to stabilize and/or regulate speed of movement of the bracket arm while the roof panel is being moved by the lifting device.

In some embodiment, the one or more stabilizing devices is connected to the bracket arm and connectable to the sidewall of the nacelle so that the bracket arm is pivotally connectable to the sidewall to stabilize and/or regulate speed of movement of the roof panel while the roof panel is being moved by the lifting device. In some embodiments, the one or more second stabilizing devices is connected to the lifting device and connectable to the nacelle to stabilize and/or regulate speed of movement of the roof panel while the roof panel is being moved by the lifting device. In some embodiments, the one or more stabilizing devices comprise: a first stabilizing device connectable to the nacelle and to the roof panel to stabilize and/or regulate speed of movement of the roof panel while the roof panel is being moved by the lifting device; and, a second stabilizing device connectable to the nacelle and to the bracket arm to stabilize and/or regulate speed of movement of the bracket arm while the roof panel is being moved by the lifting device. In some embodiments, the one or more stabilizing devices comprise one or more of a chain fall, a turnbuckle, a telescoping actuator (e.g., a hydraulic actuator, a pneumatic actuator or an electric linear actuator), a ratcheted line or strap, a traction winch and the like.

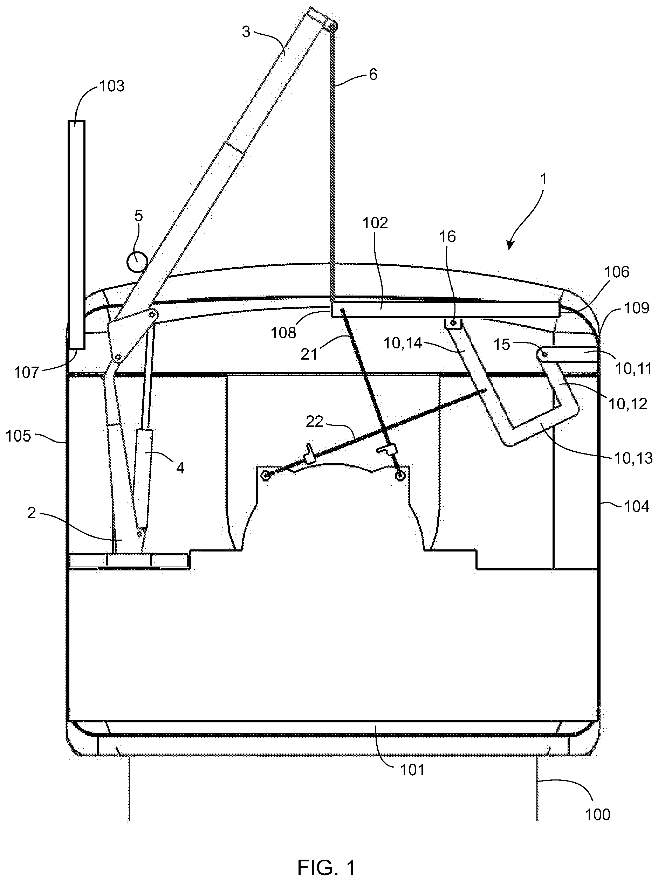

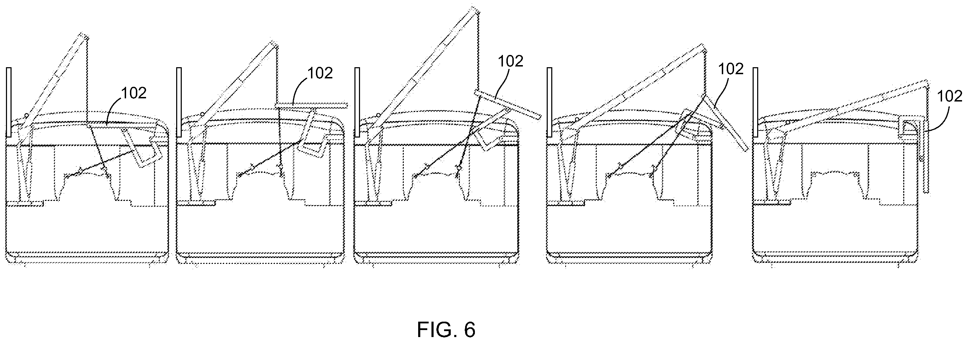

With reference to Fig. 1 to Fig. 6, a variation of a system **1** and a method for opening a roof panel **102** of a nacelle **101** of a wind turbine **100** is illustrated. Fig. 6 depicts Fig. 1 to Fig. 5 in sequence in a single Figure to provide an overview of the method. In the illustrated variation, the nacelle **101** has a bifold roof comprising two roof panels **102, 103,** each of the roof panels **102, 103** being hingedly connected through roof panel connections to respective sidewalls **104, 105** of the nacelle **101** at respective outer edges **106, 107** of the roof panels **102, 103.** The roof panel **103** is opened in the usual manner so that the roof panel **103** points vertically upward from an upper edge of the sidewall **105,** which gives space for a lifting device **2** to operate but not enough space for major components of the wind turbine **100** to be lifted in and out of the nacelle **101** because the roof panel **103** blocks access over the upper edge of the sidewall **105.**

The system **1** comprises the lifting device **2,** which may be an existing service crane found in the nacelle of many models of wind turbines or some other lift system installed in the nacelle **101** after the roof panel **103** is opened. In the illustrated variation, the lifting device **2** is a boom crane comprising a boom **3,** a hydraulic cylinder **4** to raise and lower the boom **3** and a winch **5** to raise and lower a lift line **6.** Various alternative types of lifting devices known in the art may be utilized. The lift line **6** is connected to the roof panel **102** at an inner edge **108** of the roof panel **102.**

The system **1** further comprises a bracket arm **10** mounted to the sidewall **104** inside the nacelle **101** utilizing the roof panel connections for the roof panel **102.** In this embodiment, the roof panel **102** is disconnected from the sidewall **104** before the bracket arm **10** is mounted to the sidewall **104.** The bracket arm **10** comprises a first link **11,** which is rigidly mounted to the sidewall **104** inside the nacelle **101.** The bracket arm **10** also comprises a second link, collectively **12, 13, 14.** The second link comprises a proximal section **12** pivotally mounted to the first link **11** at a first pivot point **15,** a distal section **14** pivotally mounted to the roof panel **102** at the second pivot point **16** and a middle section **13** between the proximal section **12** and the distal section **14** defining a U-shaped portion between the first pivot point **15** and the second pivot point **16.**

While the bracket arm is shown with two links, the bracket arm could instead comprise only one link or more than two links. Where more than two links are utilized, the connection between some of the links may by rigid rather than pivotal. Where one link is utilized, the link may be pivotally connected directly to the sidewall. The overall length and shape of the bracket arm can be modified to accommodate the number of links while still functioning as described herein.

Further, while the first link **11** and the sections **12, 13, 14** of the second link are shown as either linear or arcuate, any of the links and link sections can be either linear or arcuate, or have one or more linear portions and/or one or more arcuate portions. The shape and length of each link and link section contributes to an overall shape and length of the bracket arm that results in the bracket arm being able to fold over an upper edge **109** of the sidewall **104** to hold the roof panel **102** in a vertical orientation by the sidewall **104** outside the nacelle **101.**

While the pivot point **16,** to which the distal section **14** of the second link is connected, is shown in the middle of the roof panel **102,** i.e., at the center of gravity of the roof panel **102,** the pivot point **16** does not need to be exactly at the center of gravity. Likewise, while the lift line **6** is shown connected to the roof panel **102** at the inner edge **108** of the roof panel **102,** the lift line **6** can be connected to the roof panel **102** at a different location between the pivot point **16** and the inner edge **108** of the roof panel **102.**

The system **1** further comprises a first chain fall **21** connected to the nacelle **101** and to the roof panel **102** to stabilize and/or regulate speed of movement of the roof panel **102** while the roof panel **102** is being moved by the lifting device **2.** The first chain fall **21** is connected to the roof panel **102** between the lift line **6** and the second pivot point **16.** The system **1** further comprises a second chain fall **22** connected to the nacelle **101** and to the bracket arm **10,** preferably to the distal section **14** of the second link, to stabilize and/or regulate speed of movement of the bracket arm **10** while the roof panel **102** is being moved by the lifting device **2.** The chain falls **21, 22** do not need to be connected directly to the nacelle **101,** but may be connected to an immobile wind turbine component mounted in the nacelle **101,** for example the gearbox, the generator, the main shaft, the main bearing, structural points in the nacelle framework, the bedplate, or the like.

The evolution of Fig. 1 to Fig. 6 illustrates the method of using the system **1** to open the roof panel **102** and place the roof panel **102** out of the way beside the sidewall **104** outside the nacelle **101** and mostly below the upper edge **109** of the sidewall **104.** The evolution of Fig. 6 to Fig. 1 illustrates how the roof panel **102** is re-closed using the system **1.**

Fig. 1 illustrates a point in the method at which the roof panel **103** is opened as usual in the upwardly extending orientation, the roof panel **102** is still closed in the horizontal orientation, the lifting device **2** has been deployed, the lift line **6** has been connected to the inner edge **108** of the roof panel **102,** the bracket arm **10** has been mounted to the underside of the roof panel **102** at the second pivot point **16,** the roof panel **102** has been disconnected from the sidewall **104,** the bracket arm **10** has been mounted to the sidewall **104** where the roof panel **102** used to be connected, the first chain fall **21** has been connected between the roof panel **102** and the nacelle **101** and the second chain fall **21** has been connected between the bracket arm **10** (specifically the distal section **14** of the second link) and the nacelle **101.**

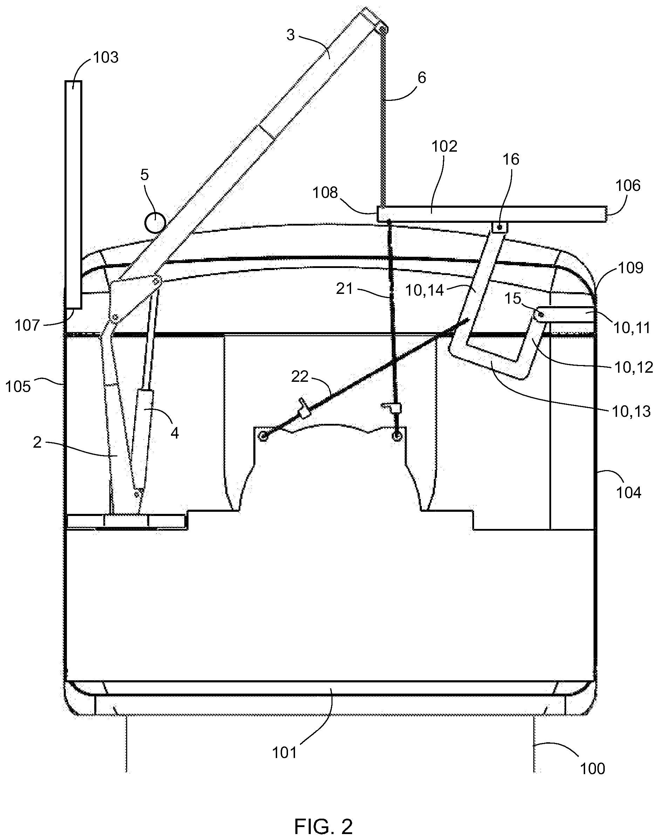

As seen in Fig. 2, the lifting device **2** is then operated to raise the lift line **6** and lower the boom **3** in tandem to raise the roof panel **102** above the upper edge **109** of the sidewall **104** while keeping the roof panel **102** in the horizontal configuration. In so doing, the roof panel **102** is moved somewhat horizontally so that the roof panel **102** is located directly above the upper edge **109** of the sidewall **104,** the first chain fall **21** becomes completely vertically oriented thereby preventing any further vertical movement of the roof panel **102** and the bracket arm **10** pivots at the first and second pivot points **15** and **16,** respectively, beginning a folding motion of the bracket arm **10.**

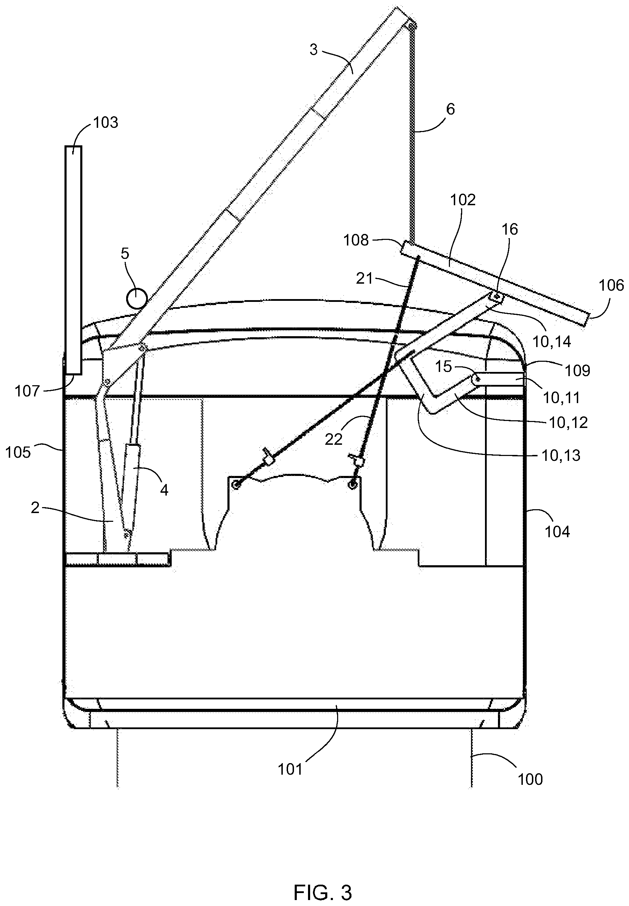

As seen in Fig. 3, the lifting device **2** is then operated to lower the lift line **6** and raise the boom **3** in tandem to start raising the inner edge **108** of the roof panel **102** and lowering the outer edge **107** of the roof panel **102** thereby tilting the roof panel **102** toward the vertical orientation, as seen in Fig. 3. The bracket arm **10** continues to pivot at the first pivot point **15,** thereby continuing the folding motion of the bracket arm **10.** Also, at this point, the second chain fall **22** is essentially aligned with the second pivot point **16.** Thus, the restraining force of the second chain fall **22** switches from pulling the distal section **14** of the second link of the bracket arm **10** in a counterclockwise direction to a clockwise direction (from the viewpoint in Fig. 3).

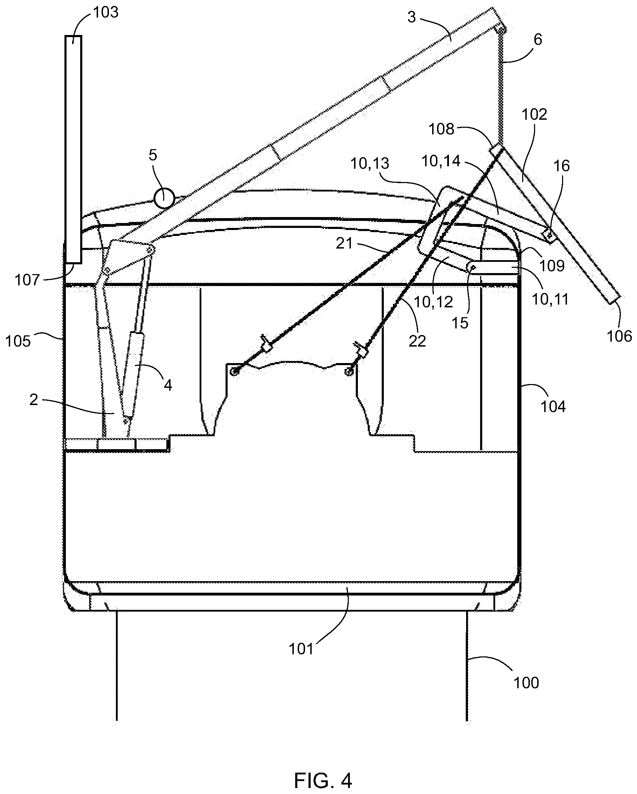

As seen in Fig. 4, the lifting device **2** is then operated to raise the lift line **6** and lower the boom **3** in tandem to continue to raise the inner edge **108** of the roof panel **102** thereby continuing to tilt the roof panel **102** toward the vertical orientation, to continue the folding motion of the bracket arm **10** and to fold the distal section **14** of the second link of the bracket arm **10** over the upper edge **109** of the sidewall **104.** As can be seen from Fig. 2 through Fig. 4, the folding motion of the bracket arm **10** results in decreasing an angle between the roof panel **102** and the distal section **14** of the second link of the bracket arm **10.**

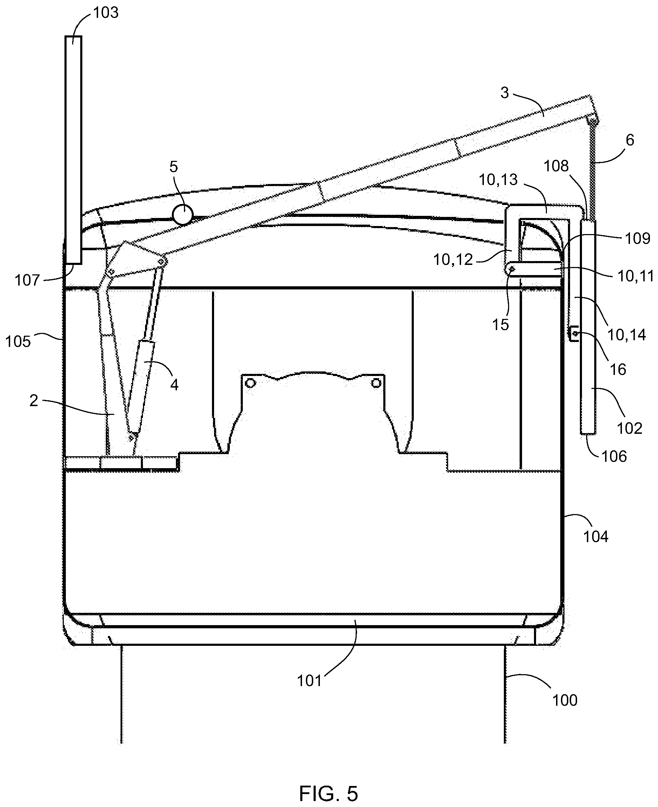

As seen in Fig. 5, the lifting device **2** is then operated to lower the boom **3** thereby completing the folding motion of the bracket arm **10** to bring both the roof panel **102** and the distal section **14** of the second link of the bracket arm **10** into the vertical orientation parallel to each other outside the nacelle **101** and beside the sidewall **104.** The upper edge **109** of the sidewall **104** is now situated under the middle section of the second link of the bracket arm **10** and between the proximal and distal sections **12** and **14,** respectively, of the second link of the bracket arm **10.** The chain falls **21, 22** are then removed so that they do not interfere with subsequent activities in the nacelle **101.** The lift system **2** remains connected to the roof panel **102** to holds the roof panel **102** out of the way of the upper edge **109** of the sidewall **104** of the nacelle **101.**

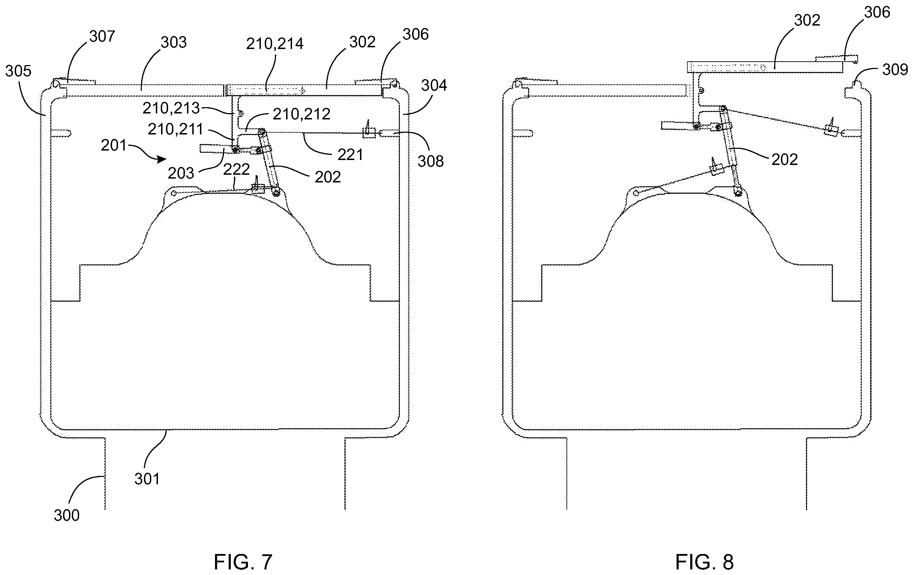

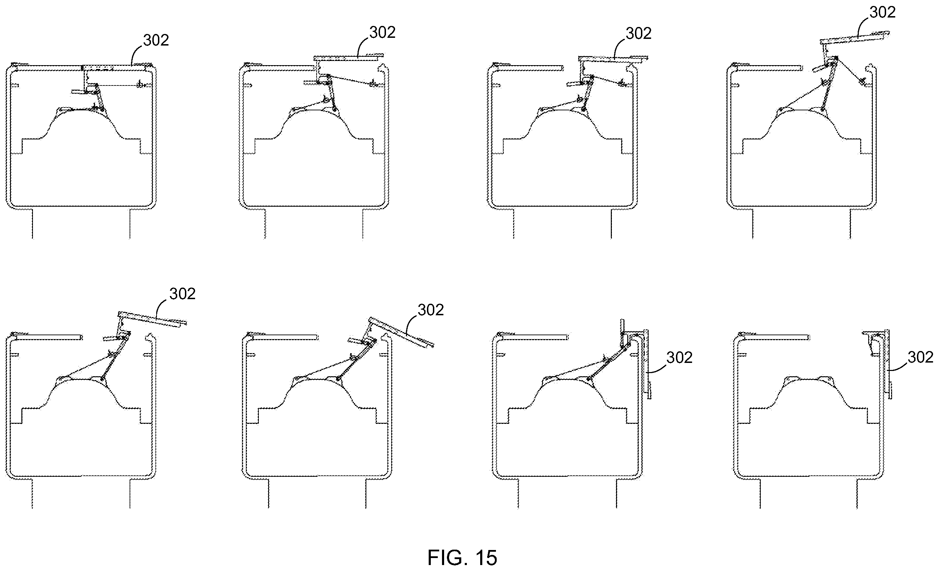

With reference to Fig. 7 to Fig. 15, in another variation, a system **201** and a method for opening a roof panel **302** of a nacelle **301** of a wind turbine **300** is illustrated. Fig. 15 depicts Fig. 7 to Fig. 14 in sequence in a single Figure to provide an overview of the method. In the illustrated variation, the nacelle **301** has a bifold roof comprising two roof panels **302, 303,** each of the roof panels **302, 303** being connected through roof panel connections **306, 307** to respective sidewalls **304, 305** of the nacelle **301** at respective outer edges of the roof panels **302, 303.**

The system **201** comprises two lifting devices, a first telescoping actuator **202** and a second telescoping actuator **203,** for example hydraulic cylinders. The system **201** further comprises a bracket arm **210** pivotally mounted to a mount **308** on the sidewall **304** inside the nacelle **301** through a first stabilizing device, which in the illustrated variation is a first chain fall **221.** The bracket arm **210** comprises a proximal arm segment **212,** which is pivotally mounted to the sidewall **304** inside the nacelle **301** through the first chain fall **221** The bracket arm **210** also comprises a distal arm segment **214** rigidly mounted to an underside of the roof panel **302** and a middle arm segment **213** between the proximal arm segment **212** and the distal arm segment **214** defining a U-shaped portion of the bracket arm **210.** The bracket arm **210** also comprises a tail portion **211** extending from the middle arm segment **213** beyond a meeting point between the proximal arm segment **212** and the middle arm segment **213.** The system **201** further comprises a second stabilizing device, which in the illustrated .to the nacelle **301.**

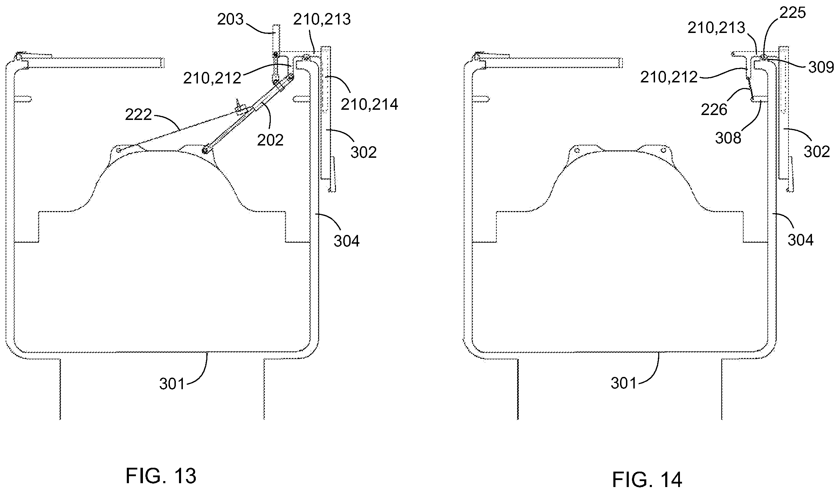

The evolution of Fig. 7 to Fig. 14 illustrates the method of using the system **201** to open the roof panel **302** and place the roof panel **302** out of the way beside the sidewall **304** outside the nacelle **301** and mostly below the upper edge of the sidewall **204.** The evolution of Fig. 14 to Fig. 7 illustrates how the roof panel **302** is re-closed using the system **201.**

Fig. 7 illustrates a point in the method representing the initial installation of the system **201** in the nacelle **301.** The distal arm segment **214** of bracket arm **210** is rigidly secured to the roof panel **302** and the proximal arm segment **212** of the bracket arm **210** is pivotally connected through the first chain fall **221** to the sidewall **304** of the nacelle **301.** One end of the first telescoping actuator **202,** for example the rod end, is pivotally connected to the nacelle **301,** while the other end, for example the barrel end, of the first telescoping actuator **202** is pivotally connected to the proximal arm segment **212** of the bracket arm **210,** for example at the same point to which the first chain fall **221** is connected. The second chain fall **222** is pivotally connected to the nacelle **301** and is connected to the portion of the first telescoping actuator **202** that is connected to the proximal arm segment **212.** One portion of the second telescoping actuator **203,** for example the barrel portion, s mounted on the tail portion **211** of the bracket arm **210,** while the other portion of the second telescoping actuator **203,** for example the rod, is pivotally connected to the portion of the first telescoping actuator **202** that is connected to the proximal arm segment **212.** The first telescoping actuator **202** and the second chain fall **222** do not need to be connected directly to the nacelle **301,** but may be connected to an immobile wind turbine component mounted in the nacelle **301,** for example the gearbox, the generator, the main shaft, the main bearing, structural points in the nacelle framework, the bedplate, or the like.

As seen in Fig. 8, once the roof panel opening system **201** has been installed the roof panel connection **306** is released and the second telescoping actuator **203** is actuated (e.g., extended) to pivot the first telescoping actuator **202** into a more vertical orientation to slightly raise the roof panel **302** vertically upward. The second chain fall **222** is slack while the first chain fall **221** is under tension.

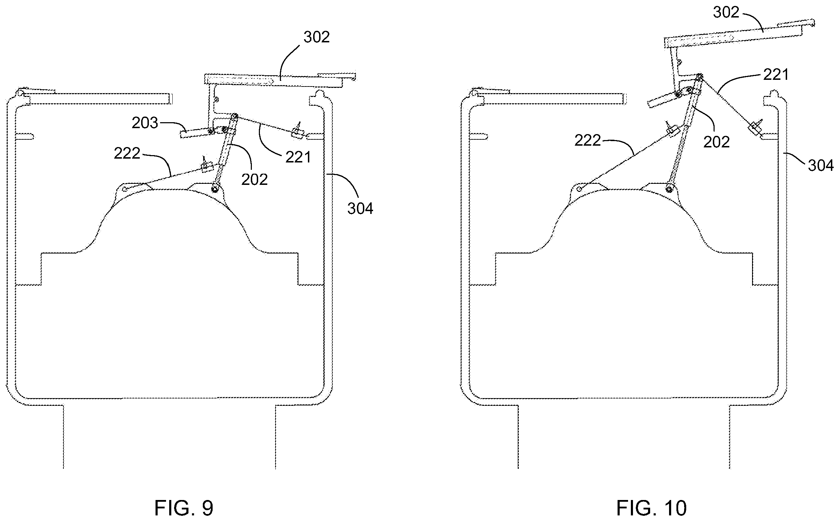

As seen in Fig. 9, the upper portion of the first telescoping actuator **202** is then pivoted toward the sidewall **304** past the directly vertical orientation by shortening the first chain fall **221.and,** if necessary, lengthening the second chain fall **222** and/or retracting the second telescoping actuator **203.** As a result, the roof panel **302** is shifted horizontally over top of the sidewall **304** and the first telescoping actuator **202** is oriented toward the sidewall **304** rather than toward the sidewall **306.**

As seen in Fig. 10, the first telescoping actuator **202** is then further actuated (e.g., extended) and the chain falls **221, 222** adjusted appropriately to raise the roof panel **302** to a higher elevation and to move the roof panel **302** further past the sidewall **304.**

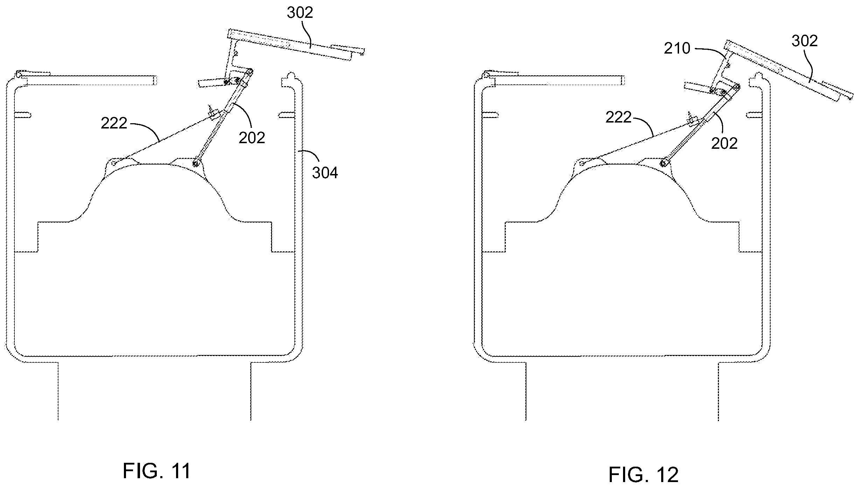

As seen in Fig. 11, the second chain fall **222** is then lengthened and the first chain fall **221** is removed so that the upper portion of the first telescoping actuator **202** tilts further toward the sidewall **304,** the roof panel **302** shifts even more horizontally and the outside edge of the roof panel **302** begins to tilt downward.

As seen in Fig. 12, further lengthening of the second chain fall **222** tilts the first telescoping actuator **202** even further toward the sidewall **304,** the roof panel **302** shifts even further horizontally and the outside edge of the roof panel **302** tilts further downward. Furthermore, the bracket arm **210** begins to hook over the top edge of the sidewall **304.**

As seen in Fig. 13, the second telescoping actuator **203** is then actuated (e.g., extended), which pushes the bracket arm **210** upwards and horizontally thereby causing the U-shaped portion of the bracket arm **210** to hook completely over the top edge of the sidewall **304** bringing the roof panel **302** into a vertical orientation outside and beside the sidewall **304** of the nacelle **301.** The middle arm segment **213** of the bracket arm **210** is over the top edge of the sidewall **304** and the sidewall **304** is bracketed by the proximal and distal arm segments **212** and **214,** respectively. At this position, the roof panel **302** has been completely opened.

As seen in Fig. 14, the second chain fall **222,** the first telescoping actuator **202** and the second telescoping actuator **203** are then removed so that the middle arm segment **213** of the bracket arm **210** is supported on the top edge of the sidewall **304,** thereby supporting the roof panel **302** on the top edge of the sidewall **304.** A pin **225** is inserted to connect the middle arm segment **213** of the bracket arm **210** to a door hinge **309** on which the roof panel **302** was originally mounted. A turnbuckle **226** can also be added between the proximal arm segment **212** of the bracket arm **210** and the mount **308** on the sidewall **304** inside the nacelle **301** to keep the roof panel **302** in place.

The novel features will become apparent to those of skill in the art upon examination of the description. It should be understood, however, that the scope of the claims should not be limited by the embodiments, but should be given the broadest interpretation consistent with the wording of the claims and the specification as a whole.

## Claims

1. A system (1; 201) for opening a roof panel (102; 302) of a nacelle (101; 301) of a wind turbine (100; 300), the system (1; 201) comprising:
a bracket arm (10; 210) mountable in the nacelle (101; 301) beneath the roof panel (102; 302), the bracket arm (10; 210) pivotally connectable to a sidewall (104, 304) of the nacelle (101; 301) inside the nacelle (101; 301), the bracket arm (10; 210) mountable underneath the roof panel (102; 302) to a portion of the roof panel (102; 302); and,
a lifting device (2; 202, 203) mountable in the nacelle (101; 301), the lifting device (2; 202, 203) operable when connected to the roof panel (102; 302) to move the roof panel (102; 302) vertically and horizontally to move the roof panel (102; 302) into a vertical orientation by the sidewall (104, 304) of the nacelle (101; 301) outside the nacelle (101; 301).

2. The system (1) of claim 1, wherein:
the bracket arm (10) is pivotally mountable to a portion of the roof panel (102) on an underside of the roof panel (102); and,
the lifting device (2) is connectable to the roof panel (102) proximate an inner edge (108) of the roof panel (102) and closer to the inner edge (108) of the roof panel (102) than where the bracket arm (10) is mountable to the roof panel (102).

3. The system (1) of claim 2, wherein the bracket arm (10) comprises: a first link (11) rigidly mountable to the sidewall (104) inside the nacelle (101); and, a second link (12, 13, 14) pivotally mounted to the first link (11) and pivotally mountable to the roof panel (102), the second link (12, 13, 14) sized and shaped to hook over an upper edge (109) of the sidewall (104) when the roof panel (102) is moved vertically and horizontally by the lifting device (2).

4. The system (1) of claim 2, wherein the bracket arm (10) comprises:
a first link (11) rigidly mountable to the sidewall (104) inside the nacelle (101); and,
a second link (12, 13, 14) pivotally mounted at a first pivot point (15) to the first link (11) and pivotally mountable at a second pivot point (16) to the roof panel (102),
the second link (12, 13, 14) comprising a proximal section (12) pivotally mounted to the first link (11) at the first pivot point (15), a distal section (14) pivotally mountable to the roof panel (102; 302) at the second pivot point (16) and a middle section (13) between the proximal and distal sections (12, 14) defining a U-shaped portion between the first and second pivot points (15, 16),
the proximal section (12) having a length longer than a first distance between the first link (11) and an upper edge (109) of the sidewall (104), the middle section (13) having a length longer than a second distance between the first pivot point (15) and the sidewall (104), and
the distal section (14) having a length longer than a third distance between the second pivot point (16) and a meeting point where the middle section (13) meets the distal section (14),
the second link (12, 13, 14) folding over the upper edge (109) of the sidewall (104) to situate the roof panel (102) in the vertical orientation by the sidewall (104) outside the nacelle (101) when the roof panel (102) is moved vertically and horizontally by the lifting device (2).

5. The system (1) of claim 3 or claim 4, wherein the bracket arm (10) is pivotally mountable to a central portion of the roof panel (102) on the underside of the roof panel (102).

6. The system (1) of any one of claims 3 to 5, wherein the nacelle (101) comprises a roof panel connection to which the roof panel (102) was connected, wherein the first link (11) is mountable to the roof panel connection.

7. The system (1) of any one of claims 1 to 6, wherein the lifting device (2) comprises a boom crane having a hydraulic cylinder (4) to raise and lower the boom (3) and a lift line (6) connected to a winch (5) to raise and lower the lift line (6).

8. The system (201) of claim 1, wherein:
the bracket arm (210) is rigidly mountable to the roof panel (302); and,
the lifting device (202, 203) is pivotally connectable to the bracket arm (210) and to the nacelle (301).

9. The system (201) of claim 8, wherein the bracket arm (210) comprises a series of arm segments (212, 213, 214) sized and shaped to permit the bracket arm (210) to hook over an upper edge (309) of the sidewall (304) when the roof panel (302) is moved vertically and horizontally by the lifting device (202, 203).

10. The system (201) of claim 9, wherein the series of arm segments comprises:
a proximal segment (212) pivotally mountable at a proximal end thereof to the sidewall (304) inside the nacelle (301);
a distal segment (214) rigidly mountable to the roof panel (302); and,
a middle segment (213) between the proximal and distal segments (212, 214) defining a U-shaped portion between the proximal end of the proximal segment (212) and a distal end of the distal segment (214), the middle segment (213) comprising a tail portion (211) extending beyond a meeting point between the proximal segment (212) and the middle segment (213).

11. The system (201) of claim 10, wherein the lifting device (202, 203) comprises:
a first telescoping actuator (202) pivotally connectable to the nacelle (301) and pivotally connected to the proximal segment (212) of the arm bracket (210); and,
a second telescoping actuator (203) connected to the tail portion (211) of the middle segment (213) of the bracket arm (210) and pivotally connected to the second telescoping actuator (203).

12. The system (1; 201) of any one of claims 1 to 11, further comprising a stabilizing device to stabilize and/or regulate speed of movement of the roof panel (102; 302) while the roof panel (102; 302) is being moved by the lifting device (2; 202, 203).

13. The system (1; 201) of claim 12, wherein the stabilizing device comprises a chain fall (21, 22; 221, 222).

14. The system (1) of claim 12 or claim 13, wherein the stabilizing device comprises:
a first stabilizing device (21) connectable to the nacelle (101) and to the roof panel (102) to stabilize and/or regulate speed of movement of the roof panel (102) while the roof panel (102) is being moved by the lifting device (2); and,
a second stabilizing device (22) connectable to the nacelle (101) and connected to the bracket arm (10) to stabilize and/or regulate speed of movement of the bracket arm (10) while the roof panel (102) is being moved by the lifting device (2).

15. The system (201) of claim 12 or claim 13, wherein the stabilizing device comprises:
a first stabilizing device (221) connected to the bracket arm (210) and connectable to the sidewall (304) of the nacelle (301) so that the bracket arm (210) is pivotally connectable to the sidewall (304) to stabilize and/or regulate speed of movement of the roof panel (302) while the roof panel (302) is being moved by the lifting device (202, 203); and,
a second stabilizing device (222) connected to the lifting device (202, 203) and connectable to the nacelle (301) to stabilize and/or regulate speed of movement of the roof panel (302) while the roof panel (302) is being moved by the lifting device (202, 203).

16. A method of opening a roof panel (102; 302) of a nacelle (101; 301) of a wind turbine (100; 300), the method comprising:
installing the system (1; 201) of any one of claims 1 to 15 in the nacelle (101; 301) of the wind turbine (100; 300); and,
operating the lifting device (2; 202, 203) to move the roof panel (102; 302) vertically and horizontally to move the roof panel (102; 302) into a vertical orientation by the sidewall (104; 304) of the nacelle (101; 301) outside the nacelle (101; 301).

## Patentansprüche

1. System (1; 201) zum Öffnen einer Dachplatte (102; 302) einer Gondel (101; 301) einer Windkraftanlage (100; 300), wobei das System (1; 201) aufweist:
einen Haltearm (10; 210), der in der Gondel (101; 301) unterhalb der Dachplatte (102; 302) befestigbar ist, wobei der Haltearm (10; 210) mit einer Seitenwand (104, 304) der Gondel (101; 301) innerhalb der Gondel (101; 301) schwenkbar verbindbar ist, wobei der Haltearm (10; 210) unterhalb der Dachplatte (102; 302) an einem Abschnitt der Dachplatte (102; 302) befestigbar ist; und
eine in der Gondel (101; 301) befestigbare Hebevorrichtung (2; 202, 203), wobei die Hebevorrichtung (2; 202, 203), wenn sie mit der Dachplatte (102; 302) verbunden ist, betätigbar ist, um die Dachplatte (102; 302) vertikal und horizontal zu bewegen, um die Dachplatte (102; 302) an der Seitenwand (104, 304) der Gondel (101; 301) außerhalb der Gondel (101; 301) in eine vertikale Ausrichtung zu bringen.

2. Das System (1) nach Anspruch 1, wobei:
der Haltearm (10) schwenkbar an einem Abschnitt der Dachplatte (102) an einer Unterseite der Dachplatte (102) befestigbar ist; und
die Hebevorrichtung (2) mit der Dachplatte (102) in der Nähe einer Innenkante (108) der Dachplatte (102) und näher an der Innenkante (108) der Dachplatte (102) als an der Stelle, an der der Haltearm (10) an der Dachplatte (102) befestigbar ist, verbindbar ist.

3. Das System (1) nach Anspruch 2, wobei der Haltearm (10) aufweist: ein erstes Verbindungsglied (11), das starr an der Seitenwand (104) innerhalb der Gondel (101) befestigbar ist; und ein zweites Verbindungsglied (12, 13, 14), das schwenkbar an dem ersten Verbindungselement (11) befestigt ist und schwenkbar an der Dachplatte (102) befestigbar ist, wobei das zweite Verbindungselement (12, 13, 14) so dimensioniert und geformt ist, dass es über eine Oberkante (109) der Seitenwand (104) einhakt, wenn die Dachplatte (102) durch die Hebevorrichtung (2) vertikal und horizontal bewegt wird.

4. Das System (1) nach Anspruch 2, wobei der Haltearm (10) aufweist:
ein erstes Verbindungsglied (11), das starr an der Seitenwand (104) innerhalb der Gondel (101) befestigbar ist; und
ein zweites Verbindungsglied (12, 13, 14), das an einem ersten Drehpunkt (15) schwenkbar an dem ersten Verbindungsglied (11) befestigt ist und an einem zweiten Drehpunkt (16) schwenkbar an der Dachplatte (102) befestigbar ist,
wobei das zweite Verbindungsglied (12, 13, 14) aufweist: einen proximalen Abschnitt (12), der am ersten Drehpunkt (15) schwenkbar am ersten Verbindungsglied (11) befestigt ist, einen distalen Abschnitt (14), der am zweiten Drehpunkt (16) schwenkbar an der Dachplatte (102; 302) befestigbar ist, und einen Mittelabschnitt (13) zwischen dem proximalen und dem distalen Abschnitt (12, 14), der einen U-förmigen Abschnitt zwischen dem ersten und dem zweiten Drehpunkt (15, 16) bildet,
wobei der proximale Abschnitt (12) eine Länge aufweist, die größer ist als ein erster Abstand zwischen dem ersten Verbindungsglied (11) und einer Oberkante (109) der Seitenwand (104),
wobei der Mittelabschnitt (13) eine Länge aufweist, die größer ist als ein zweiter Abstand zwischen dem ersten Drehpunkt (15) und der Seitenwand (104), und
wobei der distale Abschnitt (14) eine Länge aufweist, die größer ist als ein dritter Abstand zwischen dem zweiten Drehpunkt (16) und einem Verbindungspunkt, an dem der mittlere Abschnitt (13) auf den distalen Abschnitt (14) trifft,
wobei sich das zweite Verbindungsglied (12, 13, 14) über die Oberkante (109) der Seitenwand (104) klappt, um die Dachplatte (102) in vertikaler Ausrichtung an der Seitenwand (104) außerhalb der Gondel (101) zu positionieren, wenn die Dachplatte (102) durch die Hebevorrichtung (2) vertikal und horizontal bewegt wird.

5. Das System (1) nach Anspruch 3 oder Anspruch 4, wobei der Haltearm (10) schwenkbar an einem zentralen Abschnitt der Dachplatte (102) an der Unterseite der Dachplatte (102) befestigbar ist.

6. Das System (1) nach einem der Ansprüche 3 bis 5, wobei die Gondel (101) eine Dachplattenverbindung aufweist, an der die Dachplatte (102) befestigt war, wobei das erste Verbindungsglied (11) an der Dachplattenverbindung befestigbar ist.

7. Das System (1) nach einem der Ansprüche 1 bis 6, wobei die Hebevorrichtung (2) einen Auslegerkran mit einem Hydraulikzylinder (4) zum Anheben und Absenken des Auslegers (3) und ein mit einer Winde (5) verbundenes Hubseil (6) zum Anheben und Absenken des Hubseils (6) umfasst.

8. Das System (201) nach Anspruch 1, wobei:
der Haltearm (210) starr an der Dachplatte (302) befestigbar ist; und
die Hebevorrichtung (202, 203) schwenkbar mit dem Haltearm (210) und der Gondel (301) verbindbar ist.

9. Das System (201) nach Anspruch 8, wobei der Haltearm (210) eine Reihe von Armsegmenten (212, 213, 214) aufweist, die so dimensioniert und geformt sind, dass sich der Haltearm (210) über eine Oberkante (309) der Seitenwand (304) haken kann, wenn die Dachplatte (302) durch die Hebevorrichtung (202, 203) vertikal und horizontal bewegt wird.

10. Das System (201) nach Anspruch 9, wobei die Reihe von Armsegmenten aufweist:
ein proximales Segment (212), das an seinem proximalen Ende schwenkbar an der Seitenwand (304) innerhalb der Gondel (301) befestigbar ist;
ein distales Segment (214), das starr an der Dachplatte (302) befestigbar ist; und
ein mittleres Segment (213) zwischen dem proximalen und dem distalen Segment (212, 214), das einen U-förmigen Abschnitt zwischen dem proximalen Ende des proximalen Segments (212) und einem distalen Ende des distalen Segments (214) bildet, wobei das mittlere Segment (213) einen Endabschnitt (211) aufweist, der sich über einen Verbindungspunkt zwischen dem proximalen Segment (212) und dem mittleren Segment (213) hinaus erstreckt.

11. Das System (201) nach Anspruch 10, wobei die Hebevorrichtung (202, 203) aufweist:
einen ersten Teleskopantrieb (202), der schwenkbar mit der Gondel (301) verbindbar ist und schwenkbar mit dem proximalen Segment (212) des Haltearms (210) verbunden ist; und
einen zweiten Teleskopantrieb (203), der mit dem hinteren Abschnitt (211) des mittleren Segments (213) des Haltearms (210) verbunden ist und schwenkbar mit dem zweiten Teleskopantrieb (203) verbunden ist.

12. Das System (1; 201) nach einem der Ansprüche 1 bis 11, das ferner eine Stabilisierungsvorrichtung aufweist, um die Bewegungsgeschwindigkeit der Dachplatte (102; 302) zu stabilisieren und/oder zu regulieren, während die Dachplatte (102; 302) durch die Hebevorrichtung (2; 202, 203) bewegt wird.

13. Das System (1; 201) nach Anspruch 12, wobei die Stabilisierungsvorrichtung einen Kettenzug (21, 22; 221, 222) aufweist.

14. Das System (1) nach Anspruch 12 oder Anspruch 13, wobei die Stabilisierungsvorrichtung aufweist:
eine erste Stabilisierungsvorrichtung (21), die mit der Gondel (101) und der Dachplatte (102) verbindbar ist, um die Bewegungsgeschwindigkeit der Dachplatte (102) zu stabilisieren und/oder zu regulieren, während die Dachplatte (102) von der Hebevorrichtung (2) bewegt wird; und,
eine zweite Stabilisierungsvorrichtung (22), die mit der Gondel (101) verbindbar ist und mit dem Haltearm (10) verbunden ist, um die Bewegungsgeschwindigkeit des Haltearms (10) zu stabilisieren und/oder zu regulieren, während die Dachplatte (102) von der Hebevorrichtung (2) bewegt wird.

15. Das System (201) nach Anspruch 12 oder Anspruch 13, wobei die Stabilisierungsvorrichtung aufweist:
eine erste Stabilisierungsvorrichtung (221), die mit dem Haltearm (210) verbunden ist und mit der Seitenwand (304) der Gondel (301) verbindbar ist, so dass der Haltearm (210) schwenkbar mit der Seitenwand (304) verbindbar ist, um die Bewegungsgeschwindigkeit der Dachplatte (302) zu stabilisieren und/oder zu regulieren, während die Dachplatte (302) durch die Hebevorrichtung (202, 203) bewegt wird; und
eine zweite Stabilisierungsvorrichtung (222), die mit der Hebevorrichtung (202, 203) verbunden ist und mit der Gondel (301) verbindbar ist, um die Bewegungsgeschwindigkeit der Dachplatte (302) zu stabilisieren und/oder zu regulieren, während die Dachplatte (302) von der Hebevorrichtung (202, 203) bewegt wird.

16. Verfahren zum Öffnen einer Dachplatte (102; 302) einer Gondel (101; 301) einer Windkraftanlage (100; 300), wobei das Verfahren umfasst:
Einbau des Systems (1; 201) gemäß einem der Ansprüche 1 bis 15 in die Gondel (101; 301) der Windkraftanlage (100; 300); und
Betreiben der Hebevorrichtung (2; 202, 203), um die Dachplatte (102; 302) vertikal und horizontal zu bewegen, um die Dachplatte (102; 302) an der Seitenwand (104; 304) der Gondel (101; 301) außerhalb der Gondel (101; 301) in eine vertikale Ausrichtung zu bringen.

## Revendications

1. Système (1; 201) destiné à ouvrir un panneau de toit (102; 302) d'une nacelle (101; 301) d'une éolienne (100; 300), le système (1; 201) comprenant:
un bras de support (10; 210) pouvant être monté dans la nacelle (101; 301) sous le panneau de toit (102; 302), le bras de support (10; 210) pouvant être relié de manière pivotante à une paroi latérale (104, 304) de la nacelle (101; 301) à l'intérieur de la nacelle (101; 301), le bras de support (10; 210) pouvant être monté sous le panneau de toit (102; 302) sur une partie du panneau de toit (102; 302); et
un dispositif de levage (2; 202, 203) pouvant être monté dans la nacelle (101; 301), le dispositif de levage (2; 202, 203) opérable, lorsqu'il est relié au panneau de toit (102; 302), pour déplacer le panneau de toit (102; 302) verticalement et horizontalement afin de placer le panneau de toit (102; 302) en position verticale par la paroi latérale (104, 304) de la nacelle (101; 301) à l'extérieur de la nacelle (101; 301).

2. Système (1) selon la revendication 1, dans lequel:
le bras de support (10) peut être monté de manière pivotante sur une partie du panneau de toit (102) située sur une face inférieure du panneau de toit (102); et,
le dispositif de levage (2) peut être relié au panneau de toit (102) à proximité d'un bord intérieur (108) du panneau de toit (102) et plus près du bord intérieur (108) du panneau de toit (102) que l'endroit où le bras de support (10) peut être monté sur le panneau de toit (102).

3. Système (1) selon la revendication 2, dans lequel le bras de support (10) comprend: un premier lien (11) pouvant être monté de manière rigide sur la paroi latérale (104) à l'intérieur de la nacelle (101); et un deuxième lien (12, 13, 14) monté de manière pivotante sur le premier lien (11) et pouvant être monté de manière pivotante sur le panneau de toit (102), le deuxième lien (12, 13, 14) étant dimensionné et formé de manière à s'accrocher sur un bord supérieur (109) de la paroi latérale (104) lorsque le panneau de toit (102) est déplacé verticalement et horizontalement par le dispositif de levage (2).

4. Système (1) selon la revendication 2, dans lequel le bras de support (10) comprend:
un premier lien (11) pouvant être monté de manière rigide sur la paroi latérale (104) à l'intérieur de la nacelle (101); et
un deuxième lien (12, 13, 14) monté de manière pivotante en un premier point de pivotement (15) sur le premier lien (11) et pouvant être monté de manière pivotante en un deuxième point de pivotement (16) sur le panneau de toit (102),
le deuxième lien (12, 13, 14) comprenant une partie proximale (12) montée de manière pivotante sur le premier lien (11) au niveau du premier point de pivotement (15), une partie distale (14) pouvant être montée de manière pivotante sur le panneau de toit (102; 302) au niveau du deuxième point de pivotement (16) et une partie intermediaire (13) située entre les sections proximale et distale (12, 14) définissant une partie en forme de U entre les premier et deuxième points de pivotement (15, 16), la partie proximale (12) ayant une longueur supérieure à une première distance entre le premier lien (11) et un bord supérieur (109) de la paroi latérale (104),
la partie intermediaire (13) ayant une longueur supérieure à une deuxième distance entre le premier point de pivotement (15) et la paroi latérale (104), et
la partie distale (14) ayant une longueur supérieure à une troisième distance entre le deuxième point de pivotement (16) et un point de jonction où la partie médiane (13) rejoint la section distale (14),
le deuxième lien (12, 13, 14) se repliant sur le bord supérieur (109) de la paroi latérale (104) pour placer le panneau de toit (102) en position verticale par la paroi latérale (104) à l'extérieur de la nacelle (101) lorsque le panneau de toit (102) est déplacé verticalement et horizontalement par le dispositif de levage (2).

5. Système (1) selon la revendication 3 ou 4, dans lequel le bras de support (10) peut être monté de manière pivotante sur une partie centrale du panneau de toit (102), sur la face inférieure du panneau de toit (102).

6. Système (1) selon l'une quelconque des revendications 3 à 5, dans lequel la nacelle (101) comprend un raccord de panneau de toit auquel le panneau de toit (102) était relié, et dans lequel le premier lien (11) peut être monté sur le raccord de panneau de toit.

7. Système (1) selon l'une quelconque des revendications 1 à 6, dans lequel le dispositif de levage (2) comprend une grue à flèche ayant un vérin hydraulique (4) pour lever et abaisser la flèche (3) et d'un câble de levage (6) relié à un treuil (5) pour lever et abaisser le câble de levage (6).

8. Le système (201) selon la revendication 1, dans lequel:
le bras de support (210) peut être monté de manière rigide sur le panneau de toit (302); et
le dispositif de levage (202, 203) peut être relié de manière pivotante au bras de support (210) et à la nacelle (301).

9. Système (201) selon la revendication 8, dans lequel le bras de support (210) comprend une série de segments de bras (212, 213, 214) dimensionnés et formés de manière à permettre au bras de support (210) de s'accrocher sur un bord supérieur (309) de la paroi latérale (304) lorsque le panneau de toit (302) est déplacé verticalement et horizontalement par le dispositif de levage (202, 203).

10. Le système (201) selon la revendication 9, dans lequel la série de segments de bras comprend:
un segment proximal (212) pouvant être monté de manière pivotante à son extrémité proximale sur la paroi latérale (304) à l'intérieur de la nacelle (301);
un segment distal (214) pouvant être monté de manière rigide sur le panneau de toit (302); et,
un segment intermédiaire (213) situé entre les segments proximal et distal (212, 214) et définissant une partie en forme de U entre l'extrémité proximale du segment proximal (212) et l'extrémité distale du segment distal (214), le segment intermédiaire (213) comprenant une partie de queue (211) s'étendant au-delà d'un point de jonction entre le segment proximal (212) et le segment intermédiaire (213).

11. Système (201)selon la revendication 10, dans lequel le dispositif de levage (202, 203) comprend:
un premier actionneur télescopique (202) pouvant être relié de manière pivotante à la nacelle (301) et relié de manière pivotante au segment proximal (212) du support de bras (210); et,
un deuxième actionneur télescopique (203) relié à la partie arrière (211) du segment intermédiaire (213) du bras de support (210) et relié de manière pivotante au deuxième actionneur télescopique (203).

12. Le système (1; 201) selon l'une quelconque des revendications 1 à **11,** comprenant en outre un dispositif de stabilisation destiné à stabiliser et/ou à réguler la vitesse de déplacement du panneau de toit (102; 302) pendant que le panneau de toit (102; 302) est déplacé par le dispositif de levage (2; 202, 203).

13. Système (1; 201) selon la revendication 12, dans lequel le dispositif de stabilisation comprend un palan à chaîne (21, 22; 221, 222).

14. Système (1) selon la revendication 12 ou 13, dans lequel le dispositif de stabilisation comprend:
un premier dispositif de stabilisation (21) pouvant être relié à la nacelle (101) et au panneau de toit (102) pour stabiliser et/ou réguler la vitesse de déplacement du panneau de toit (102) pendant que le panneau de toit (102) est déplacé par le dispositif de levage (2); et,
un deuxième dispositif de stabilisation (22) pouvant être relié à la nacelle (101) et relié au bras de support (10) afin de stabiliser et/ou de réguler la vitesse de déplacement du bras de support (10) pendant que le panneau de toiture (102) est déplacé par le dispositif de levage (2).

15. Système (201) selon la revendication 12 ou 13, dans lequel le dispositif de stabilisation comprend:
un premier dispositif de stabilisation (221) relié au bras de support (210) et pouvant être relié à la paroi latérale (304) de la nacelle (301) de telle sorte que le bras de support (210) peut être relié de manière pivotante à la paroi latérale (304) pour stabiliser et/ou réguler la vitesse de déplacement du panneau de toit (302) pendant que le panneau de toit (302) est déplacé par le dispositif de levage (202, 203); et,
un deuxième dispositif de stabilisation (222) relié au dispositif de levage (202, 203) et pouvant être relié à la nacelle (301) pour stabiliser et/ou réguler la vitesse de déplacement du panneau de toit (302) pendant que le panneau de toit (302) est déplacé par le dispositif de levage (202, 203).

16. Procédé d'ouverture d'un panneau de toit (102; 302) d'une nacelle (101; 301) d'une éolienne (100; 300), le procédé comprenant:
l'installation du système (1; 201) selon l'une quelconque des revendications 1 à 15 dans la nacelle (101; 301) de l'éolienne (100; 300); et
actionner le dispositif de levage (2; 202, 203) pour déplacer le panneau de toit (102; 302) verticalement et horizontalement afin de placer le panneau de toit (102; 302) en position verticale par la paroi latérale (104; 304) de la nacelle (101; 301) à l'extérieur de la nacelle (101; 301).
